# EUROPEAN PATENT APPLICATION

(11) **EP 2 811 389 A1**
(43) Date of publication of application: **10.12.2014**
(21) Application number: 14170750.5
(22) Date of filing: 02.06.2014
(51) Int. Cl.: G06F 3/0488, G06F 3/01, G06F 3/16

(54) **Activating a selection and a confirmation method**

(30) Priority: 03.06.2013 US 201313908454
(71) Applicant: Nokia Corporation, 02610 Espoo (FI)
(72) Inventor: Tammi, Mikko, 33310 Tampere (FI); Lehtiniemi, Arto, 33880 Lempäälä (FI)
(74) Representative: Nokia Corporation

(57) **Abstract**

An apparatus, method, and computer program product for: receiving an indication of a pre-defined gesture detected by a motion tracking device, in response to receiving the indication of the detected pre-defined gesture, activating a selection method, wherein the selection method is dependent on motion detected by the motion tracking device, and activating a confirmation method for confirming a selection, wherein the confirmation method is independent of motion detected by the motion tracking device.

## Description

### TECHNICAL FIELD

The present application relates generally to activating a selection and a confirmation method.

### BACKGROUND

Electronic devices may be utilized for many different things. For example, writing and sending messages, listening to music, browsing internet pages or navigation.

### SUMMARY

Various aspects of examples of the invention are set out in the claims.

According to a first aspect of the present invention, there is provided a method comprising: receiving an indication of a pre-defined gesture detected by a motion tracking device, in response to receiving the indication of the detected pre-defined gesture, activating a selection method, wherein the selection method is dependent on motion detected by the motion tracking device, and activating a confirmation method for confirming a selection, wherein the confirmation method is independent of motion detected by the motion tracking device.

According to a second aspect of the present invention, there is provided an apparatus comprising a processor, memory including computer program code, the memory and the computer program code configured to, working with the processor, cause the apparatus to perform at least the following: receive an indication of a pre-defined gesture detected by a motion tracking device, in response to receiving the indication of the detected pre-defined gesture, activate a selection method, wherein the selection method is dependent on motion detected by the motion tracking device, and activate a confirmation method for confirming a selection, wherein the confirmation method is independent of motion detected by the motion tracking device.

According to a third aspect of the present invention, there is provided a computer program product comprising a computer-readable medium bearing computer program code embodied therein for use with a computer, the computer program code comprising code for receiving an indication of a pre-defined gesture detected by a motion tracking device, code for, in response to receiving the indication of the detected pre-defined gesture, activating a selection method, wherein the selection method is dependent on motion detected by the motion tracking device and code for activating a confirmation method for confirming a selection, wherein the confirmation method is independent of motion detected by the motion tracking device.

According to a fourth aspect of the present invention there is provided an apparatus, comprising means for receiving an indication of a pre-defined gesture detected by a motion tracking device, means for, in response to receiving the indication of the detected pre-defined gesture, activating a selection method, wherein the selection method is dependent on motion detected by the motion tracking device, and means for activating a confirmation method for confirming a selection, wherein the confirmation method is independent of motion detected by the motion tracking device.

In an example embodiment, the apparatus further comprises means for using the selection method for accessing an audible menu comprising at least one selectable item, wherein a location of a selectable item the audible menu is indicated by spatial audio.

According to an example embodiment, the apparatus comprises means for exiting the audible menu, in response to receiving a confirmation of a selection.

In an example embodiment, wherein the selectable item comprises a point of interest, the apparatus may comprise means for providing audio navigation to the point of interest.

In an example embodiment, the apparatus comprises means for causing at least partially attenuating ambient sounds coming from the direction of the selectable menu item.

### BRIEF DESCRIPTION OF THE DRAWINGS

For a more complete understanding of example embodiments of the present invention, reference is now made to the following descriptions taken in connection with the accompanying drawings in which:
FIGURE 1 shows a block diagram of an example apparatus in which examples of the disclosed embodiments may be applied;
FIGURE 2 shows a block diagram of another example apparatus in which examples of the disclosed embodiments may be applied;
FIGURE 3 illustrates user interaction with an audible menu in accordance with an example embodiment of the invention;
FIGURE 4 illustrates an example method incorporating aspects of example embodiments of the invention.

### DETAILED DESCRIPTION OF THE DRAWINGS

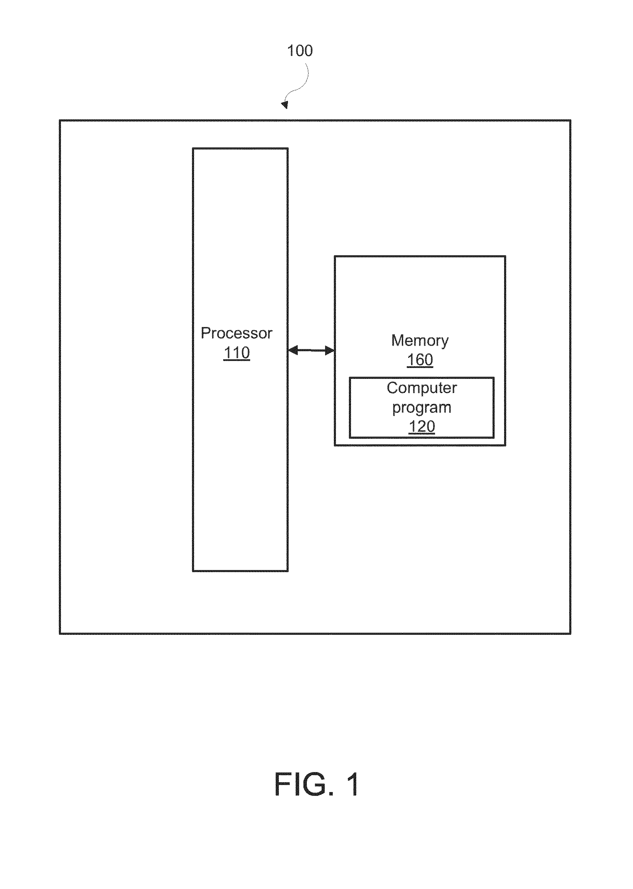

Example embodiments of the present invention and its potential advantages are understood by referring to FIGURES 1 through 4 of the drawings.

Example embodiments relate to activating a selection and a confirmation method. According to an example embodiment, an indication of a pre-defined gesture is received and, in response to receiving the indication of the pre-defined gesture, a selection method is activated. The gesture may be detected by a motion tracking device such as a head tracker with one or more orientation sensors. In an example embodiment, the selection method is dependent on motion detected by the motion tracking device. Further, a confirmation method for confirming a selection is activated. In an example embodiment, the confirmation method is independent of motion detected by the motion tracking device.

According to an example embodiment, a user may wish to utilize audio navigation to find a route to a particular point of interest. While on the move, the user may use a wearable motion tracking device operably connected to a mobile computing device to enable hands-free control of the mobile computing device. As another example, a wearable motion tracking device may comprise a mobile computing device. Detecting, by the motion tracking device, a pre-determined motion gesture, may cause accessing an audible menu comprising, for example, different points of interests. The pre-defined motion gesture may also cause activating the selection method that is dependent on motion detected by the motion tracking device and the confirmation method that is independent of motion detected by the motion tracking device. Utilizing the motion tracking device the user may select a point of interest in the audible menu by performing different kinds of motion gestures and then confirm the selection independent of motion detected by the motion tracking device. A location of a menu item may be indicated to the user by spatial audio by providing an impression of sound coming from the particular location.. The menu item may be selected by motion towards the corresponding menu item. After selecting the point of interest, the audible menu may be exited, but guidance to the point of interest may still be played to the user.

FIGURE 1 is a block diagram depicting an apparatus 100 operating in accordance with an example embodiment of the invention. The apparatus 100 may, for example, be an electronic device such as a chip or a chip-set. The apparatus 100 includes a processor 110 and a memory 160. In other examples, the apparatus 100 may comprise multiple processors.

In the example of Fig. 1, the processor 110 is a control unit operatively connected to read from and write to the memory 160. The processor 110 may also be configured to receive control signals received via an input interface and/or the processor 110 may be configured to output control signals via an output interface. In an example embodiment the processor 110 may be configured to convert the received control signals into appropriate commands for controlling functionalities of the apparatus. The processor may further be operatively connected to external devices. For example, the processor 110 may further be configured to be operatively connected to an accessory such as a headset.

The memory 160 stores computer program instructions 120 which when loaded into the processor 110 control the operation of the apparatus 100 as explained below. In other examples, the apparatus 100 may comprise more than one memory 160 or different kinds of storage devices.

Computer program instructions 120 for enabling implementations of example embodiments of the invention or a part of such computer program instructions may be loaded onto the apparatus 100 by the manufacturer of the apparatus 100, by a user of the apparatus 100, or by the apparatus 100 itself based on a download program, or the instructions can be pushed to the apparatus 100 by an external device. The computer program instructions may arrive at the apparatus 100 via an electromagnetic carrier signal or be copied from a physical entity such as a computer program product, a memory device or a record medium such as a Compact Disc (CD), a Compact Disc Read-Only Memory (CD-ROM), a Digital Versatile Disk (DVD) or a Blu-ray disk.

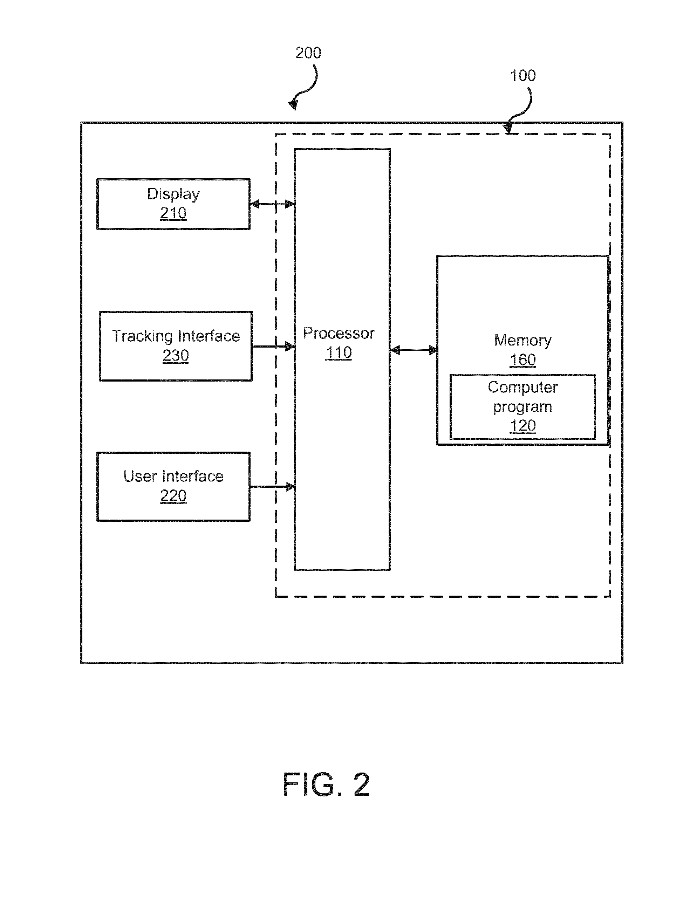

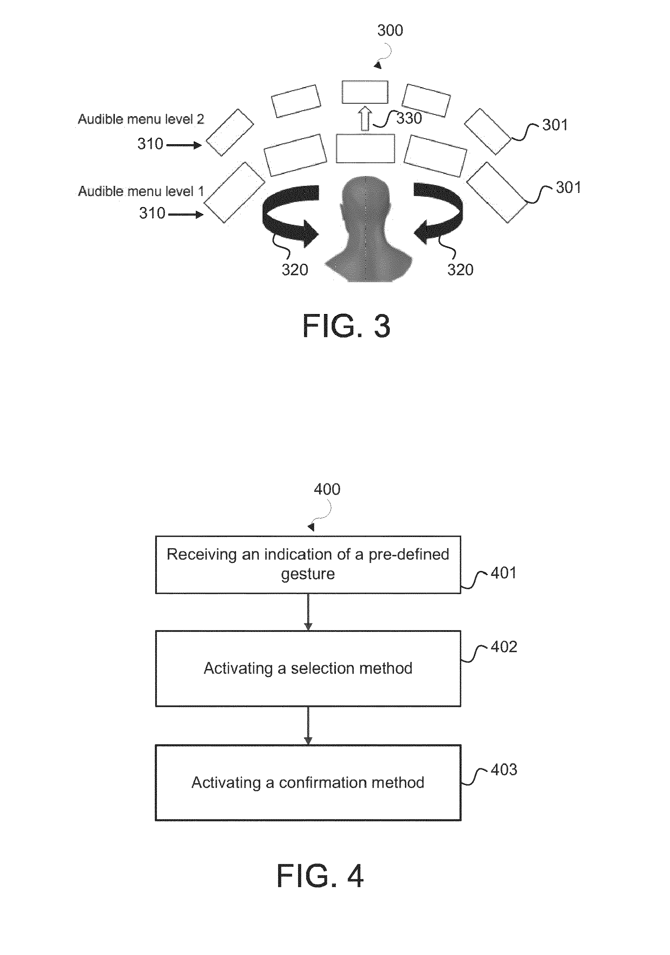

FIGURE 2 is a block diagram depicting an apparatus 200 in accordance with an example embodiment of the invention. The apparatus 200 may be an electronic device such as a hand-portable device, a mobile phone or a Personal Digital Assistant (PDA), a Personal Computer (PC), a laptop, a tablet computer, a wireless terminal, a communication terminal, a game console, a music player, an electronic book reader (e-book reader), a positioning device, a digital camera, a CD- DVD or Blu-ray player, or a media player. The apparatus 200 may also be, or be comprised in, a household appliance such as a refrigerator, a coffee maker, or any other suitable device such as a dashboard in a car. In the examples of Figs. 2 and 3 it is assumed that the apparatus 200 is a mobile computing device.

In this example, the mobile computing device 200 is illustrated as comprising the apparatus 100, a display 210 and a user interface 220. However, the display 210 and/or user interface 220 may be external to the apparatus 200 but in communication with it. In some examples the display 210 may be incorporated into the user interface 220: for example, the user interface 220 may include a touch screen display.

In the example of Fig. 2 the user interface 220 is configured to enable inputting and accessing information in the mobile computing device 200. According to an example embodiment, the user interface 220 comprises a surface capable of receiving user inputs. The surface may be an input surface such as a touch screen or a touch pad. In some example embodiments, the mobile computing device 200 may include both a touch screen and a touch pad or multiple surfaces capable of receiving user inputs. A touch screen may be configured not to only enable accessing and/or inputting information but also to display user interface objects, while a touch pad may be configured to enable accessing and/or inputting information and a separate display may be provided. In some example embodiments, no display is provided. A user may input and access information by using a suitable input means such as a pointing means, one or more fingers, a stylus or a digital pen.

In an example embodiment, inputting and accessing information is performed by touching the surface such as the surface of a touch screen display 210 or a touch pad. Additionally or alternatively, proximity of an input means such as a finger or a stylus may be detected and inputting and accessing information may be performed by hovering the finger or the stylus over the surface. In a further example embodiment the surface may be a multi-touch surface configured to detect multiple at least partially concurrent touches on the surface.

A touch screen or a touch pad may be based on one or more of several different technologies. For example, different touch screen and pad technologies include resistive, capacitive, Surface Acoustic Wave (SAW), infrared, strain gauge, optical imaging, dispersive signal technology and acoustic pulse recognition touch screens. A touch screen or a touch pad may also operate using a combination of different technologies.

Additionally or alternatively, the user interface 220 may also comprise a manually operable control such as a button, a key, a touch pad, a joystick, a stylus, a pen, a roller, a rocker, a keypad, a keyboard or any suitable input mechanism for inputting and/or accessing information. Further examples include a microphone, a speech recognition system, eye movement recognition system, acceleration-, tilt-, movement- and/or pressure based input systems.

According to an example embodiment, the mobile computing device 200 comprises a tracking interface 230. The tracking interface 230 may comprise, for example, an operative connection with a motion tracking device. The motion tracking device may comprise a wearable motion tracking device such as a headset or a ring with one or more orientation sensors. In some embodiments, the tracking interface may additionally or alternatively comprise an operative connection with other kinds of tracking devices such as an accelerometer or a gyroscope for detecting motion input provided by a user. In some embodiments, there may be more than one tracking interfaces, for example, a tracking interface for a headset and a tracking interface for an accelerometer and/ or gyroscope.

Referring back to the example of Fig.2, in addition to a display, the mobile computing device 200 may include another kind of an output device such as a tactile feedback system for presenting tactile and/or haptic information for a user. The tactile feedback system may be configured to receive control signals provided by the processor 110. The tactile feedback system may be configured to indicate a completed operation or to indicate selecting an operation, for example. In an example embodiment a tactile feedback system may cause the mobile computing device 200 to vibrate in a certain way to inform a user of an activated and/or completed operation.

In the example of Fig. 2, the apparatus 100 is configured to receive an indication of a pre-defined gesture detected by a motion tracking device. The motion tracking device may comprise, a portable motion tracking device or a wearable motion tracking device such as a head tracker or any other type of motion tracking device. The motion tracking device may be configured to detect a directional motion (e.g. pointing upwards, downwards, left or right), a free form motion, a speed of a motion, or any other suitable motion. The detected motion may comprise a motion gesture performed by the user. A motion gesture may comprise a sequence of movement performed by the user.

The pre-defined gesture may comprise a motion gesture such as a head turn, finger pointing, a hand wave or any other suitable motion gesture. For example, if the motion tracking device is a headset with a head tracker, the pre-defined gesture may comprise turning the head to a predefined direction such as upwards and keeping it pointing upwards for a pre-defined period of time. The pre-defined period of time may comprise, for example, 0.1 to 5 seconds such as 0.5, 0.8, 1, 1.2, 1.5, 2, 3.5, 4.2 or 5 seconds. In some examples, the pre-defined period of time may be longer than 5 seconds. The pre-defined period of time may be determined by the user, the manufacturer of the apparatus 100, the manufacturer of the mobile computing device 200, the manufacturer of the motion tracking device, or it may be determined based on detected user behavior. The gesture may be pre-defined, for example, by the user of the device 200 or the manufacturer of the device 200.

The apparatus 100 is configured to, in response to receiving the indication of the detected pre-defined gesture, activate a selection method, wherein the selection method is dependent on motion detected by the motion tracking device. Receiving the indication of the detected pre-defined gesture may comprise, for example, receiving multiple measured values and comparing the values with the pre-defined gesture, or receiving a binary value indicating whether the detected gesture matches with the pre-defined gesture.

In an example embodiment, activating a selection method may comprise deactivating a previous selection method and activate a new selection method. In other words, activating a selection method may comprise replacing a selection method with another. In another example embodiment, activating a selection method may comprise activating a new selection method as an additional selection method. In this way, the user may be able to choose which selection method he wishes to use. As a further example, activating a selection method may comprise making an active selection method as the primary selection method.

A selection method dependent on motion detected by the motion tracking device may comprise selecting an item based on detected motion, wherein the motion is detected by the motion tracking device. For example, if the motion tracking device is a head tracker with one or more orientation sensors and the user turns his head left, an item to the left may be selected. Similarly, if the user turns his head right, an item to the right may be selected. As a further example, if the user turns his head up or down, an upper or a lower item or group of items, respectively, may be selected. For example, an upper or a lower item may comprise an individual menu item or a menu level.

Without limiting the scope of the claims, an advantage of activating a selection method by a pre-defined gesture detected by a motion tracking device may comprise hands free activation. For example, a user may activate an audio navigation menu by turning his head to a pre-defined direction for a certain period of time, which is detected by the motion tracking device. Turning the head, for example, upwards for a certain period of time may have an advantage that the possibility of unintentionally activating an audio navigation menu while, for example, walking may be reduced.

In the example of FIGURE 2, the apparatus 100 is further configured to activate a confirmation method for confirming a selection, wherein the confirmation method is independent of motion detected by the motion tracking device. In an example embodiment, activating a confirmation method may comprise deactivating a previous confirmation method and activating a new confirmation method. For example, activating a confirmation method may comprise deactivating touch inputs detectable by a touch screen and activating tap inputs detectable by an accelerometer. In other words, activating a selection method may comprise replacing a selection method with another. As another example embodiment, a activating a confirmation method may comprise activating a confirmation method as an additional selection method. For example, activating a confirmation method may comprise activating tap inputs as an additional confirmation method, in addition to touch inputs. As a further example, activating a confirmation method may comprise making an active confirmation method as the primary conformation method. For example, if both touch inputs and tap inputs are activated, activating a confirmation method may comprise making the tap input method as the primary confirmation method.

According to an example embodiment, a confirmation method independent of motion detected by the motion tracking device may comprise, for example, confirming selections by a touch input detected by a touch sensor, a tap input detected by an accelerometer or a gyroscope, by pressure sensitive elements, by gaze tracking, by a camera or a hovering sensor, or any other suitable method such as a combination thereof According to an example embodiment, confirming a selection comprises receiving an indication of an input detected by an accelerometer. As another example embodiment, confirming a selection comprises pressing or tapping a dedicated button in the headset or in the headset cable. If the headset comprises a microphone, the microphone may be tapped to confirm a selection. According to an example embodiment, confirming a selection comprises receiving an indication of at least one of an input detected by an accelerometer and an input detected by a microphone. For example, a user may confirm a selection by a combination of inputs such as a tap input and audio input. The audio input may comprise, for example, a speech input given by the user or a sound of the tap input detected by the microphone. According to an example embodiment, confirming a selection comprises a method different from the method used for the selection.

Without limiting the scope of the claims, an advantage of activating a confirmation method may be that a confirmation method suitable for the context may be activated. For example, activating a tap input as a confirmation method, makes it possible for the user to confirm a selection by tapping the mobile computing device 200 when the device is in a pocket. An advantage of activating a confirmation method independent of motion detected by the motion tracking device may be that the number of unintentional confirmations may be reduced. Similarly, an advantage of confirming a selection by a combination of inputs may be that the number of unintentional confirmations may be reduced.

According to an example embodiment, the apparatus 100 is configured to use the selection method for accessing an audible menu comprising at least one selectable item. An audible menu may comprise a menu wherein one or more menu items are indicated to the user by audio cues. An audio cue may comprise playing back a sound relating to a menu item. An audio cue may comprise, for example, playing back the name of the item, a description of the item, a type of the item, a characteristic of the item, the size of the item, the relevance of the item, the status of the item and/or any combination thereof.

The audible menu may be accessed as a consequence of or in response to, for example, receiving the indication of a pre-defined gesture detected by a motion tracking device, activating the selection method, activating the conformation method or receiving an indication of a confirmed selection.

Without limiting the scope of the claims, an advantage of an audible menu may be that it allows eyes-free usage. Another advantage may be that in certain occupations users need their both hands for working and, therefore, holding a device in their hands may be very challenging. The same may apply also with navigation: the user can focus on the navigation itself, when he does not need to concentrate on how to select an item and confirm the selection. In addition, an audible menu may be used by visually impaired persons.

In an example embodiment, a location of a selectable item the audible menu is indicated by spatial audio. Spatial audio may comprise providing an impression that sounds are coming from sound sources anywhere in three dimensional (3D) space. Therefore, spatial audio may comprise directional audio. For example, with spatial audio an impression may be created that sound comes from behind of the listener, above the listener, below the listener, from the right side or the left side of the listener, or from a certain distance from the listener. Spatial audio may also include 3D audio effects such as 3D simulation including a reverb effect, for example. Therefore, providing an audio cue coming from the left, an impression may be created to the user that an item is located to the left of the user. According to an example embodiment, the apparatus 100 is configured to cause at least partially attenuate ambient sounds coming from the indicated direction of the selectable menu item. At least partially attenuating ambient sounds coming from the indicated direction of the selectable menu item may comprise attenuating all the ambient sounds or selectively attenuating ambient sounds. For example, selectively attenuating ambient sounds may comprise attenuating frequencies of ambient sounds corresponding to frequencies of the audio cue. As an example, if the audio cue comprises a certain frequency band, ambient sounds within the frequency band may be attenuated, but ambient sounds outside the frequency band may not be attenuated.

Without limiting the scope of the claims, an advantage of at least partially attenuating sounds coming from the direction of the selectable item may be that the user may better perceive the instructions. An advantage of partially attenuating sounds may be that for safety reasons it may be important to also hear ambient sounds from the direction of the selectable item, for example, in traffic.

According to an example embodiment, spatial audio together with a motion tracking device may be utilized to assist the user to select an item in the audible menu. For example, with spatial audio, as discussed above, an impression may be created by the apparatus 100 that a selectable item is to the left of the user. Assuming the motion tracking device comprises a headset with one or more orientation sensors: to select the item, a user may turn his head to the left. As another example, assuming a user's ring includes a motion tracking device: to select an item in a particular direction, the user may point his finger to the particular direction. In other words, a location of an item may be indicated to the user by spatial or directional audio, and the item may be selected based on corresponding spatial or directional movement.

According to an example embodiment, the spatial audio comprises an audio cue related to a characteristic of the selectable item. For example, assuming the menu items relate to navigation and the user wishes to find a point of interest of a particular type (e.g. a restaurant), the audio cue may comprise sounds typical of the point of interest (e.g. typical restaurant sounds). According to an example embodiment, the selectable item comprises a point of interest.

Without limiting the scope of the claims, an advantage of utilizing spatial audio for providing audio cues and utilizing a motion tracking device to select an item relating to the audio cue by a corresponding spatial movement such as pointing the item, may be that the interaction is very intuitive for the user.

According to an example embodiment, the apparatus 100 is further configured to exit the audible menu in response to receiving a confirmation of a selection. In an example embodiment, exiting the audible menu may not interrupt a function initiated by the confirmation of the selection. For example, assuming the selected item is a point of interest in a navigation menu and the menu was exited in response to confirming the selection of the point of interest, any navigation instructions guiding the user to the point of interest may be provided even though the menu is exited.

According to an example embodiment, the audible menu comprises a contextual audible menu. For example, if the user is walking in a city, a menu item may relate to a location, sightseeing, restaurant, shop, traffic, weather and/or the like near the user. In other words, the apparatus 100 may be configured to receive information relating to the context of the user and utilize the information by providing the contextual menu.

According to an example embodiment, the apparatus 100 is configured to provide audio navigation to the point of interest. Audio navigation may include providing instructions to the user on how to find a particular location or what is the fastest way there. In an example embodiment, audio navigation comprises providing navigation instructions in an audible form. In an example, an audible instruction is given dependent on the physical location of the point of interest relative to the user. For example, if a point of interest is located on the right of the user in the physical world, an audio instruction may be provided such that the user has an impression that the audio instruction comes from the right.

FIGURE 3 illustrates an example of user interaction 300 with an audible menu. It is assumed that the user wears a headset with one or more orientation sensors and the headset is operatively connected to a mobile computing device 200 comprising an apparatus 100.

In this example, the audible menu comprises two menu levels 310 comprising selectable items 301. In this example, both the menu levels 310 comprise five selectable items 301 and the user may move 330 between menu levels by inputting a pre-determined gesture such as a double tap or turning his head up or down. The apparatus 100 is configured to select a selectable item on an audible menu level based on detected head movements of the user. In other words, the apparatus 100 is configured to receive an indication of a head movement to a particular direction and select an item in the corresponding direction. For example, a selectable item indicated to the user as being on the left may be selected by turning the head to the left. Similarly, a selectable item indicated to the user as being on the right may be selected by turning the head to the right. A selected item may be indicated by playing back a particular sound, for example.

In an example embodiment, the apparatus 100 is configured to indicate different menu levels to the user using spatial audio. The apparatus 100 may be configured to indicate different menu levels by utilizing directional audio and/or different kinds of audio effects such as a reverb effect and/or setting an audio balance. For example, in the example of FIGURE 3, the apparatus 100 may be configured to make selectable items 301 on the audible menu level 1 appear in terms of sound more front than the selectable items 301 on the audible menu level 2. Similarly, the apparatus 100 may be configured to make selectable items 30 on the audible menu level 2 appear in terms of sound more back than the selectable items 30 on the audible menu level 1. Hence, the apparatus 100 is configured to audibly present selectable items wherein the audible presentation depends on the location of the item in the menu structure.

In the example of FIGURE 3, the user may access the audible menu by turning his head to a pre-defined direction (e.g. upwards) for a pre-determined period of time (e.g. 3 seconds). In response to accessing the audible menu the user may be presented with audio cues indicating the directions comprising selectable items on the first menu level. For example, the user may be presented with sounds coming from right, left, or both right and left to indicate the directions of selectable items. In some examples, the user may additionally be presented with sound coming from up and down or any other appropriate directions. Further, the user may be presented with an audio cue indicating that there is also a second menu level. As explained above, the audio cues may be context sensitive in terms of indicating a type or a characteristic of a selectable menu item or a menu level. For example, if the first menu level comprises points of interests relating to restaurants, an audio cue with typical restaurant sounds may be provided for the user. In this example, the user may confirm a selection of an item by tapping the mobile computing device 200.

According to an example embodiment, the apparatus 100 may be configured to provide multiple audible menu levels, wherein the audible menu levels may be previewed by the user. In an example embodiment, the apparatus 100 is configured to associate an audible menu level with a particular motion, orientation, angle and/or a range of orientations or angles detected by the motion tracking device. The apparatus 100 may be configured to provide an audible cue in response to receiving an indication that an orientation corresponding to an orientation associated with a particular audible menu level is detected.

For example, assuming there are three audible menu levels available: a first menu level comprises points of interest relating to restaurants, a second menu level comprises points of interests relating to hotels and a third menu level relating to movie theaters. The apparatus 100 may be configured to divide the available pointing angle into three portions and the user may receive information on different menu levels by turning his head from right to left or left to right. Hence, in response to facing the first portion, an audio cue comprising typical restaurant sounds is played for the user, in response to facing the second portion an audio cue comprising typical hotel sounds is played for the user, and in response to facing the last portion typical movie theater sounds are played to the user. The audio cue may additionally or alternatively comprise one or more words played to the user such as: "restaurants", "hotels", "movie theaters".

FIGURE 4 illustrates an example method 400 incorporating aspects of the previously disclosed embodiments. In this example it is assumed that the method is implemented in the mobile computing device 200 comprising the apparatus 100. More specifically the example method 400 illustrates activating a selection method and a confirmation method.

The method starts with receiving 401 receiving an indication of a pre-defined gesture detected by a motion tracking device such as a headset with one or more orientation sensors. The headset is operatively connected to the mobile computing device 200 and the connection may be a wired or a wireless connection (e.g. via Bluetooth).

At block 402, in response to receiving the indication of the detected pre-defined gesture, a selection method is activated, wherein the selection method is dependent on motion detected by the motion tracking device. As discussed earlier, the activated selection method may comprise, for example, selecting items in a menu by detecting motion such as head turning, finger pointing and/or the like.

The method continues with activating 403 a confirmation method for confirming a selection, wherein the confirmation method is independent of motion detected by the motion tracking device. Further, an audible menu may be accessed by the apparatus 100. The selection may be confirmed by playing a sound for the user. In an example the audible menu may be accessed automatically. In another example, a confirmation from the user may be required.

Upon accessing the audible menu, a sound may be played to the user to indicate the that there are selectable items in the menu. In an example embodiment, a sound may be played from the direction where a menu item is. The directions may comprise, for example, left, right, up and/or down. A menu option that the user is facing may be presented with audible sounds and/or speech. The apparatus 100 is configured to select an item in response to receiving an indication of a motion detected by the motion tracking device. Therefore, the user may select an item, for example, by turning his head.

Without in any way limiting the scope, interpretation, or application of the claims appearing below, a technical effect of one or more of the example embodiments disclosed herein that hands-free and eyes-free navigation is provided. Another advantage may be that the apparatus 100 is configured to intelligently activate a selection method and a confirmation method based on the audio navigation state. A further advantage may be that an intuitive way of indicating a location of a menu item (e.g. by directional audio cues) and selecting a menu item (e.g. by head movement) is provided.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in FIGURE 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

## Claims

1. A method comprising:
receiving an indication of a pre-defined gesture detected by a motion tracking device;
in response to receiving the indication of the detected pre-defined gesture, activating a selection method, wherein the selection method is dependent on motion detected by the motion tracking device; and
activating a confirmation method for confirming a selection, wherein the confirmation method is independent of motion detected by the motion tracking device.

2. A method according to claim 1, further comprising using the selection method for accessing an audible menu comprising at least one selectable item, wherein a location of a selectable item the audible menu is indicated by spatial audio.

3. A method according to claim 2, wherein the spatial audio further comprises an audio cue related to a characteristic of the selectable item.

4. A method according to claim 2 or 3, further comprising exiting the audible menu, in response to receiving a confirmation of a selection.

5. A method according to any of claims 2 to 4, wherein the audible menu comprises a contextual audible menu.

6. A method according to any preceding claim, wherein confirming a selection comprises receiving an indication of at least one of an input detected by an accelerometer and an input detected by a microphone.

7. A method according to any of claims 2 to 6, wherein the selectable item comprises a point of interest.

8. A method according to claim 7, further comprising providing audio navigation to the point of interest.

9. A method according to any of claims 2 to 8, further comprising causing at least partially attenuating ambient sounds coming from the direction of the selectable menu item.

10. A method according to any preceding claim, wherein the motion tracking device comprises a headset with a head tracker.

11. An apparatus, comprising:
means for receiving an indication of a pre-defined gesture detected by a motion tracking device;
means for, in response to receiving the indication of the detected pre-defined gesture, activating a selection method, wherein the selection method is dependent on motion detected by the motion tracking device; and
means for activating a confirmation method for confirming a selection, wherein the confirmation method is independent of motion detected by the motion tracking device.

12. An apparatus according to claim 11, the apparatus comprising means for performing a method according to any of claims 2 to 10.

13. A computer program product comprising a computer-readable medium bearing computer program code embodied therein for use with a computer, the computer program code comprising code for performing a method according to any of claims 1 to 10.
